# EUROPÄISCHE PATENTSCHRIFT

(11) **EP 3 003 788 B1**
(45) Veröffentlichungstag und Bekanntmachung des Hinweises auf die Patenterteilung: **09.08.2017**
(21) Anmeldenummer: 14727529.1
(22) Anmeldetag: 02.06.2014
(51) Int. Cl.: B60R 16/04, H01M 2/02, H01M 2/10

(54) **MULDENELEMENT FÜR EINEN KRAFTWAGEN SOWIE ANORDNUNG EINER BATTERIE AN EINEM SOLCHEN MULDENELEMENT**
TRAY ELEMENT FOR A MOTOR VEHICLE AND ARRANGEMENT OF A BATTERY ON A TRAY ELEMENT OF THIS TYPE
ÉLÉMENT BAC DESTINÉ À UN VÉHICULE AUTOMOBILE ET AGENCEMENT D'UNE BATTERIE DANS LEDIT ÉLÉMENT BAC

(30) Priorität: 05.06.2013 DE 102013210469
(43) Veröffentlichungstag der Anmeldung: 13.04.2016
(73) Patentinhaber: Bayerische Motoren Werke Aktiengesellschaft, 80809 München (DE)
(72) Erfinder: GOTTMANN, Helmut, 84098 Hohenthann / Schmatzhausen (DE); HIRSCH, Peter, 85354 Freising (DE); JAEGER, Matthias, 04610 Meuselwitz (DE); PAPROTH, Clemens, 80802 München (DE)
(86) Internationale Anmeldenummer: PCT/EP2014/061364
(87) Internationale Veröffentlichungsnummer: WO 2014/195262

(56) Entgegenhaltungen:
- EP-A1- 1 479 567
- EP-A2- 1 260 427
- WO-A1-99/36974
- WO-A1-03/007402
- DE-A1- 10 132 191
- DE-A1-102007 044 428
- JP-A- 2012 138 205
- US-A1- 2004 251 858

## Beschreibung

Die Erfindung betrifft einen Personenkraftwagen mit einem Muldenelement der im Oberbegriff des Patentanspruchs 1 angegebenen Art.

Ein solches Muldenelement sowie ein solche Anordnung einer Batterie an einem Muldenelement für einen Kraftwagen sind der DE 10 2007 044 428 A1 als bekannt zu entnehmen. Das Muldenelement weist dabei wenigstens eine in Fahrzeughochrichtung nach oben offene Aufnahmemulde auf, in welcher wenigstens eine Batterie des Kraftwagens zumindest teilweise aufnehmbar beziehungsweise aufgenommen ist. Das Muldenelement ist dabei als Kunststoffspritzteil ausgebildet, wobei zur Erhöhung der Steifigkeit mindestens ein integriertes Hohlprofil vorgesehen ist, welches mittels eines Injektionsverfahrens ausgeformt ist. Dies führt zu einer hohen Teileanzahl sowie zu einem hohen Gewicht des Muldenelements.

Ferner ist aus der WO 03/007402 A1 ein Modul für Batterien und andere Fahrzeugkomponenten bekannt, das einstückig in einem Spritzgußverfahren aus einem Kunststoffmaterial hergestellt ist. Alternativ besteht das Modul aus einem Leichtmetall, beispielsweise aus Aluminium.

Es ist daher Aufgabe der vorliegenden Erfindung, einen Personenkraftwagen mit einem Muldenelement der eingangs genannten Art weiterzuentwickeln.

Diese Aufgabe wird durch ein Muldenelement mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Die Erfindung betrifft einen Personenkraftwagen mit einem Muldenelement. Das Muldenelement ist in einem Stauraumbereich des Kraftwagens anordenbar und weist wenigstens eine in Fahrzeughochrichtung nach oben offene Aufnahmemulde zum zumindest teilweisen Aufnehmen wenigstens einer Batterie des Kraftwagens auf.

Um ein besonders geringes Gewicht des Muldenelements auf kostengünstige Weise realisieren zu können, ist es vorgesehen, dass das Muldenelement als Druckgussbauteil aus einem Leichtmetall ausgebildet ist. Unter dem Begriff "Leichtmetall" ist auch eine entsprechende Leichtmetalllegierung zu verstehen, aus welcher das Muldenelement gebildet ist. Bei dem Leichtmetall beziehungsweise der Leichtmetalllegierung handelt es sich vorzugsweise um Aluminium beziehungsweise eine Aluminiumlegierung, mittels welcher ein besonders geringes Gewicht des Muldenelements realisierbar ist.

Infolge der Ausgestaltung des Muldenelements als Druckgussbauteil aus dem Leichtmetall können auch geringe Wanddicken sowie komplexe Geometrien auf einfache, zeit- und kostengünstige Weise hergestellt werden, so dass dadurch einerseits das Gewicht des Muldenelements besonders gering gehalten und andererseits eine hohe Steifigkeit des Muldenelements erzielt werden kann. Insbesondere ist es möglich, eine hohe Steifigkeit des Muldenelements ohne zusätzliche, separat vom Muldenelement ausgebildete Versteifungselemente realisieren zu können.

Das Muldenelement wird üblicherweise auch als Wanne, insbesondere als Gepäckraumwanne, bezeichnet, da das Muldenelement zumindest im Bereich seiner Aufnahmemulde zumindest im Wesentlichen wannenförmig ausgebildet ist, wobei die Batterie zumindest teilweise in dem wannenförmigen Bereich aufnehmbar ist.

Erfindungsgemäß weist das Muldenelement wenigstens eine Anbindungseinrichtung mit wenigstens zwei Anbindungselementen auf, wobei an den Anbindungselementen jeweils eine Versteifungsstrebe am Muldenelement festgelegt ist, wobei die Versteifungsstreben unterhalb des Fahrzeugbodens des Personenkraftwagens schräg zueinander und schräg zur Fahrzeuglängsrichtung verlaufen und der Aussteifung der Karosserie des Personenkraftwagens dienen.

Zur Realisierung einer besonders einfachen, kosten- und gewichtsgünstigen Befestigung der Batterie am Muldenelement ist es bei einer besonders vorteilhaften Ausführungsform der Erfindung vorgesehen, dass das einstückige Muldenelement wenigstens ein Befestigungselement zum Befestigen der Batterie am Muldenelement aufweist. Mit anderen Worten ist das wenigstens eine Befestigungselement in das Muldenelement integriert, so dass das wenigstens eine Befestigungselement einstückig mit dem übrigen Muldenelement ausgebildet ist. Hierdurch können zusätzliche, separat vom Muldenelement ausgebildete Befestigungselemente zum Befestigen der Batterie am Muldenelement vermieden werden. Alternativ kann die Anzahl an vom Muldenelement separaten Befestigungselementen zum Befestigen der Batterie am Muldenelement besonders gering gehalten werden, so dass die Batterie mit einer nur sehr geringen Teileanzahl und somit kosten- und gewichtsgünstig am Muldenelement befestigt werden kann.

Die Erfindung betrifft eine Anordnung einer Batterie an einem Muldenelement für einen Kraftwagen, insbesondere einen Personenkraftwagen. Bei der Anordnung weist das Muldenelement wenigstens eine in Fahrzeughochrichtung nach oben offene Aufnahmemulde auf, in welcher die Batterie zumindest teilweise aufgenommen ist.

Zur Realisierung eines besonders geringen Gewichts des Muldenelements auf besonders kostengünstige Weise ist es erfindungsgemäß vorgesehen, dass das Muldenelement als Druckgussbauteil aus einem Leichtmetall ausgebildet ist. Dadurch kann auch eine besonders hohe Steifigkeit dargestellt werden. Vorteilhafte Ausgestaltungen des ersten Aspekts der Erfindung sind als vorteilhafte Ausgestaltungen des zweiten Aspekts der Erfindung anzusehen und umgekehrt.

Bei der erfindungsgemäßen Anordnung sind nicht nur eine hohe Steifigkeit sowie ein geringes Gewicht des Muldenelements selbst realisierbar. Vielmehr weist die gesamte Anordnung eine hohe Steifigkeit und Stabilität auf, da die Batterie besonders fest und steif am Muldenelement und über dieses an einem Aufbau, insbesondere der Karosserie, des Kraftwagens befestigt werden kann.

Eine besonders steife und leichte Anbindung der Batterie ist dadurch realisierbar, dass das Muldenelement einstückig ausgebildet ist und wenigstens ein Befestigungselement aufweist, mittels welchem die Batterie am Muldenelement befestigt ist. Mit anderen Worten ist das Befestigungselement in das Muldenelement integriert, so dass zusätzliche, separat vom Muldenelement ausgebildete Befestigungselemente zum Befestigen der Batterie am Muldenelement vermieden oder in ihrer Anzahl gering gehalten werden können.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Unteransicht eines Muldenelements für einen Personenkraftwagen, welches in einem Stauraumbereich des Kraftwagens anordenbar ist und wenigstens eine in Fahrzeughochrichtung nach oben offenden Aufnahmemulde zum zumindest teilweisen Aufnehmen wenigstens einer Batterie des Kraftwagens aufweist, wobei das Muldenelement als Druckgussbauteil aus Aluminium beziehungsweise einer Aluminiumlegierung ausgebildet ist;
- Fig. 2: eine schematische Vorderansicht des Muldenelements;
- Fig. 3: eine schematische Draufsicht des Muldenelements;
- Fig. 4: eine schematische Seitenansicht des Muldenelements;
- Fig. 5: ausschnittsweise eine schematische Perspektivansicht des Muldenelements;
- Fig. 6: eine schematische und perspektivische Draufsicht einer Anordnung einer Batterie gemäß einer ersten Ausführungsform an dem Muldenelement;
- Fig. 7: eine schematische Längsschnittansicht der Anordnung gemäß Fig. 6;
- Fig. 8: ausschnittsweise eine weitere schematische Längsschnittansicht der Anordnung gemäß Fig. 6;
- Fig. 9: ausschnittsweise eine weitere schematische Längsschnittansicht der Anordnung gemäß Fig. 6;
- Fig. 10: ausschnittsweise eine schematische Schnittansicht einer Anordnung der Batterie gemäß einer zweiten Ausführungsform an dem Muldenelement;
- Fig. 11: ausschnittsweise eine weitere schematische und perspektivische Draufsicht der Anordnung gemäß Fig. 6; und
- Fig. 12: ausschnittsweise eine weitere schematische und perspektivische Draufsicht der Anordnung gemäß Fig. 6.

In den Figuren sind gleiche oder funktionsgleiche Elemente mit gleichen Bezugszeichen versehen.

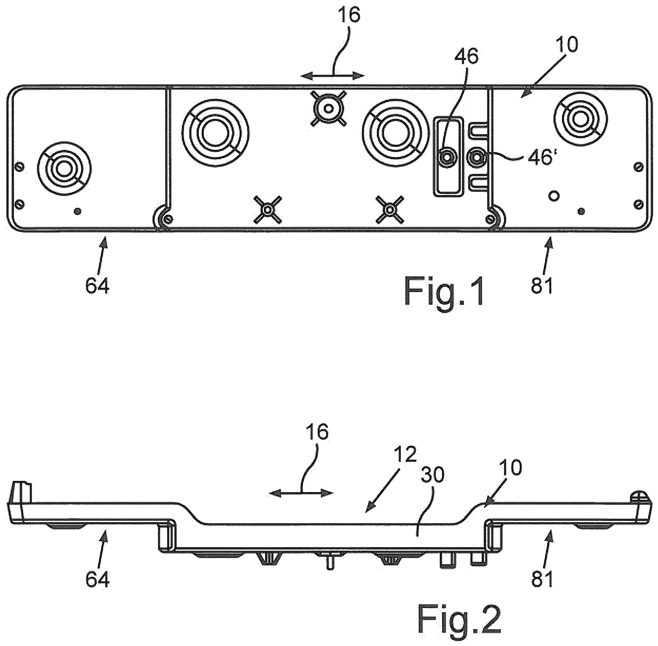

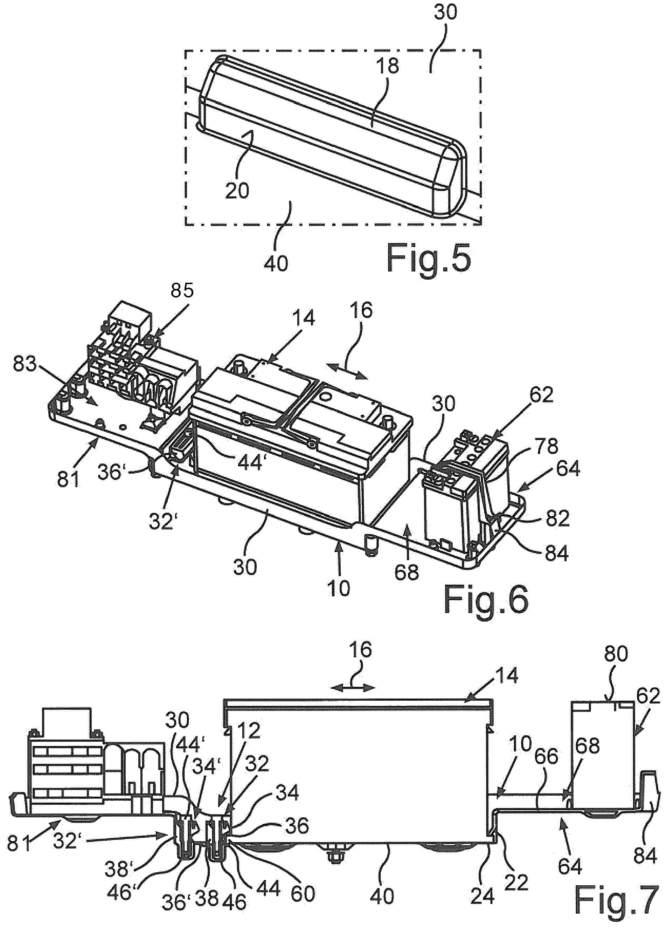

Fig. 1 bis 4 zeigen ein im Ganzen mit 10 bezeichnetes Muldenelement für einen Personenkraftwagen. Das Muldenelement 10 ist in einem Stauraumbereich, beispielsweise in einem Gepäckraum, des Personenkraftwagens anordenbar und weist eine Aufnahmemulde 12 auf, welche bezogen auf einen Einbauzustand des Muldenelements 10, in welchem das Muldenelement 10 an der Karosserie des Personenkraftwagens befestigt ist, in Fahrzeughochrichtung nach oben hin offen ist. Wie aus einer Zusammenschau von Fig. 1 und 6 zu erkennen ist, dient die Aufnahmemulde 12 zum zumindest teilweisen Aufnehmen einer Batterie 14, wobei die Batterie 14 in Fig. 6 gemäß einer ersten Ausführungsform gezeigt ist.

Um die Batterie 14 am Muldenelement 10 zu befestigen, wird die Batterie 14 in Fahrzeughochrichtung von oben in die Aufnahmemulde 12 eingesetzt und - wie im Folgenden noch erläutert wird - am Muldenelement 10 befestigt.

Zur Realisierung eines besonders geringen Gewichts sowie gleichzeitig einer besonders hohen Steifigkeit des Muldenelements 10 ist das Muldenelement 10 als Druckgussbauteil aus einem Leichtmetall ausgebildet. Bei dem Leichtmetall handelt es sich um Aluminium beziehungsweise eine Aluminiumlegierung. Mit anderen Worten ist das Muldenelement 10 mittels eines Druckgussverfahrens aus Aluminium beziehungsweise einer Aluminiumlegierung hergestellt. Dadurch kann eine hinreichende Steifigkeit des Muldenelements 10 ohne zusätzliche Versteifungselemente realisiert werden. In der Folge können die Teileanzahl und somit das Gewicht des Muldenelements 10 besonders gering gehalten werden.

Das Muldenelement 10 wird beispielsweise nach seiner Herstellung mit der Karosserie verbunden, indem das Muldenelements 10 beispielsweise mit der Karosserie vernietet, das heißt an der Karosserie mittels Nieten befestigt wird. Das Muldenelement 10 weist eine durch einen Richtungspfeil 16 veranschaulichte Längserstreckungsrichtung auf. Bezogen auf den Einbauzustand fällt die Längserstreckungsrichtung des Muldenelements 10 mit der Fahrzeugquerrichtung zusammen.

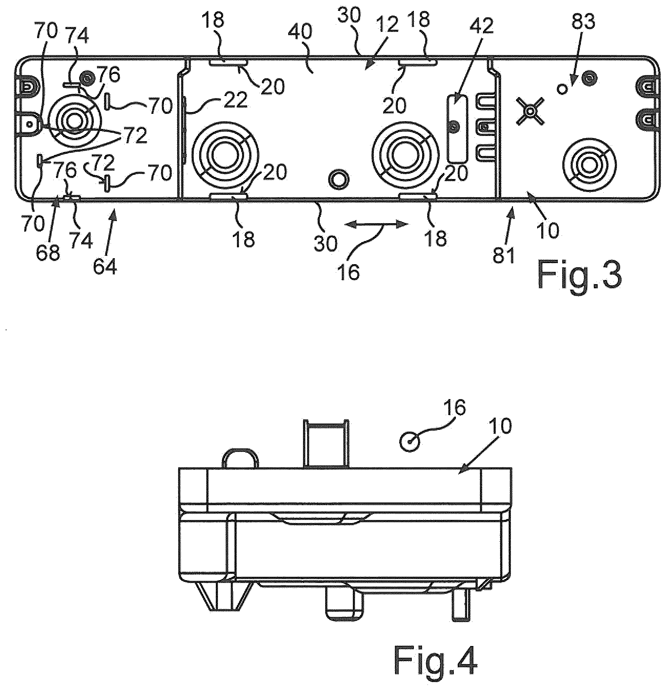

Wie aus Fig. 3 erkennbar ist, weist das Muldenelement 10 in seiner Aufnahmemulde 12 Anschlagelemente 18 mit jeweiligen Anlageflächen 20 auf. In ihrem in der Aufnahmemulde 12 angeordneten Zustand kann sich die Batterie 14 in Fahrzeuglängsrichtung an den Anlageflächen 20 abstützen. Dies bedeutet, dass durch die Anlageflächen 20 eine Zentrierung oder Positionierung der Batterie 14 in Fahrzeuglängsrichtung bereitgestellt ist. Dabei sind die Anschlagelemente 18 in das Muldenelement 10 integriert. Mit anderen Worten ist das Muldenelement 10 einstückig ausgebildet. Dies bedeutet, dass die Anschlagelemente 18 einstückig mit dem übrigen Muldenelement 10 ausgebildet sind. Zusätzliche, vom Muldenelement 10 separate Elemente zur Zentrierung der Batterie 14 in Fahrzeuglängsrichtung sind somit nicht vorgesehen und nicht erforderlich.

Fig. 5 zeigt eines der Anschlagelemente 18 stellvertretend für alle Anschlagelemente 18 in einer Draufsicht.

Fig. 6 zeigt in einer schematischen und perspektivischen Draufsicht eine Anordnung der Batterie 14 gemäß der ersten Ausführungsform an dem Muldenelement 10. Wie besonders gut aus Fig. 3 und 7 erkennbar ist, ist in das Muldenelement 10 ein Befestigungselement in Form einer Klemmleiste 22 integriert. Dies bedeutet, dass das einstückige Muldenelement 10 die Klemmleiste 22 aufweist, welche zum Befestigen der Batterie 14 am Muldenelement 10 dient. Die Klemmleiste 22 erstreckt sich - bezogen auf den Einbauzustand - in Fahrzeuglängsrichtung zumindest über einen überwiegenden Teil einer in Fahrzeuglängsrichtung verlaufenden Erstreckung der Aufnahmemulde 12. Die Klemmleiste 22 ist dabei als Formschlusselement ausgebildet, mittels welchem ein korrespondierendes, batterieseitiges Befestigungselement in Form eines Klemmfußes 24 der Batterie 14 in Fahrzeughochrichtung nach oben überdeckbar beziehungsweise bei der Anordnung überdeckt ist. Beim Befestigen der Batterie 14 am Muldenelement 10 wird die Batterie 14 derart in die Aufnahmemulde 12 eingesetzt, dass der Klemmfuß 24 unter die Klemmleiste 22 geschoben bzw. gesteckt wird.

Die Integration der Klemmleiste 22 in das als Druckgussbauteil ausgebildete Muldenelement 10 erfolgt beispielsweise mittels wenigstens eines Schiebers einer beweglichen Werkzeughälfte, die im Rahmen des Druckgussverfahrens zur Herstellung des Muldenelements 10 verwendet wird. Durch diese Integration können zusätzliche, separat vom Muldenelement 10 ausgebildete Befestigungselemente zum Befestigen der Batterie 14 am Muldenelement 10 vermieden oder in ihrer Anzahl gering gehalten werden. Somit können die Teileanzahl und das Gewicht der Anordnung insgesamt gering gehalten werden. Ferner kann die Anzahl an erforderlichen Verbindungstechniken gering gehalten werden, und die Batterie 14 kann in besonders kurzer Zeit am Muldenelement 10 befestigt werden. Darüber hinaus weist die Anordnung einen nur sehr geringen Bauraumbedarf auf. Des Weiteren können auf die Batterie 14 wirkende Kräfte besonders gut von der Batterie 14 in das Muldenelement 10 eingeleitet werden, da eine solche Krafteinleitung über die integrierte Klemmleiste 22 direkt in das Druckgussbauteil erfolgen kann.

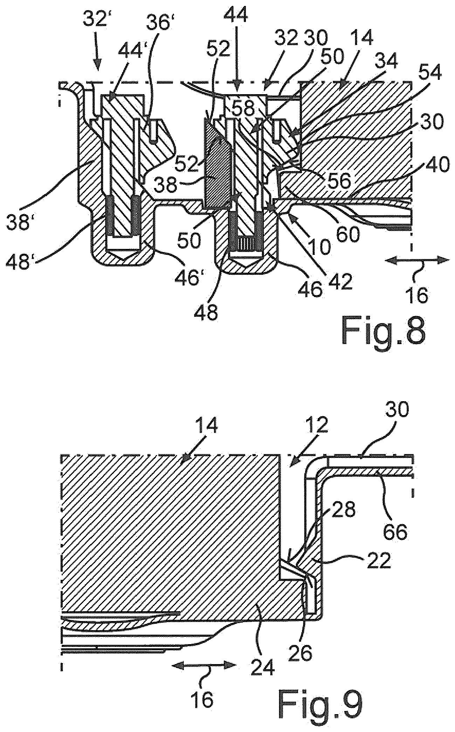

Wie besonders gut aus Fig. 9 erkennbar ist, verlaufen jeweilige Abstützflächen 26, 28 der Klemmleiste 22 beziehungsweise des Klemmfußes 24 schräg zur Fahrzeughochrichtung und bezogen auf die Bildebene von Fig. 9 von links oben nach rechts unten, so dass die Klemmleiste 22 und der Klemmfuß 24 keilartig zusammenwirken. Wird die Batterie 14 relativ zum Muldenelement 10 in Richtung der Klemmleiste 22 gedrückt, so wird dadurch aufgrund der keilartigen Ausgestaltung der Abstützflächen 26, 28, weiche sich im am Muldenelement 10 befestigten Zustand der Batterie 14 in gegenseitiger Stützanlage befinden, eine Erhöhung einer in Fahrzeughochrichtung verlaufenden Klemmkraft bewirkt, mittels welcher die Batterie 14 bei der Anordnung am Muldenelement 10 festgeklemmt und dadurch in Fahrzeughochrichtung am Muldenelement 10 und somit am Personenkraftwagen insgesamt fixiert ist.

Eine Fixierung der Batterie 14 in Fahrzeuglängsrichtung ist durch die Aufnahrmemulde 12 und insbesondere durch die Anschlagelemente 18 an Wandungen 30 (Fig. 3) der Aufnahmemulde 12 gewährleistet. Eine Fixierung der Batterie 14 bezogen auf die Bildebene von Fig. 9 in Fahrzeugquerrichtung nach rechts ist durch die Aufnahmemulde 12 und insbesondere die Klemmleiste 22 gewährleistet. Auf einer der integrierten Klemmleiste 22 gegenüberliegenden Seite ist die Fixierung der Batterie 14 gemäß der ersten Ausführungsform durch eine Befestigungseinrichtung 32 realisiert. Die Befestigungseinrichtung 32 umfasst eine im Ganzen mit 34 bezeichnete Klemmschiene, welche ein Oberteil 36 und ein damit korrespondierendes Unterteil 38 umfasst. Das Oberteil 36 und das Unterteil 38 sind dabei separat voneinander und separat vom Muldenelement 10 ausgebildet.

In Fig. 8 ist erkennbar, dass das Muldenelement 10 an seinem Boden 40 eine Aussparung 42 für das Unterteil 38 aufweist. Die Aussparung 42 ist somit eine Ausnehmung beziehungsweise eine Aufnahme für das Unterteil 38, so dass das Unterteil 38 in Fahrzeugquerrichtung und in Fahrzeuglängsrichtung formschlüssig am Muldenelement 10 fixiert ist. Mit anderen Worten kann sich das Unterteil 38 in Fahrzeugquerrichtung und in Fahrzeuglängsrichtung an die Aussparung 42 begrenzenden Wandungen des Muldenelements 10 abstützen. Durch diese Fixierung beziehungsweise Abstützung des Unterteils 38 am Muldenelement 10 ist eine besonders vorteilhafte und direkte Krafteinleitung in das Gussbauteil realisierbar.

Zum Befestigen der Klemmschiene 34 am Muldenelement 10 ist wenigstens ein Schraubelement in Form einer Schraube 44 vorgesehen. Die Schraube 44 ist über einen Schraubdom 46 des Muldenelements 10 mit diesem verbunden. Im Schraubdom 46 ist ein mit der Schraube 44 korrespondierendes Schraubelement 48 mit der die Schraube 44 verschraubt beziehungsweise in das die Schraube 44 eingeschraubt werden kann, um dadurch die Schraube 44 und mittels dieser die Klemmschiene 34 am Muldenelement 10 zu befestigen.

Ist die Batterie 14 in die Aufnahmemulde 12 eingesetzt, so dass sich der Klemmfuß. 24 unter der Klemmleiste 22 befindet, so wird beispielsweise das Oberteil 36 auf das Unterteil 38 aufgesetzt, und die Schraube 44 wird durch korrespondierende Durchgangsöffnungen 50 des Oberteils 36 und des Unterteils 38 hindurchgesteckt und mit dem Schraubelement 48 und darüber mit dem Muldenelement 10 verschraubt. Das Oberteil 36 und das Unterteil 38 weisen jeweilige Abstützflächen 52 auf, welche im Einbauzustand schräg zur Fahrzeughochrichtung verlaufen und somit ähnlich der Abstützflächen 26, 28 keilförmig ausgebildet sind beziehungsweise zusammenwirken. Beim Festziehen der Schraube 44 kann das Oberteil 36 am Unterteil 38 abgleiten und sich somit in Richtung des Bodens 40 bewegen.

Um dadurch die Batterie 14 am Muldenelement 10 festzuklemmen, weist das Oberteil 36 eine Klemmnase 54 auf, die über eine Abstützfläche 56 mit einer Abstützfläche 58 eines Klemmfußes 60 der Batterie 14 zusammenwirkt. Dabei verlaufen auch die Abstützflächen 56, 58 schräg zur Fahrzeughochrichtung, so dass sie keilförmig beziehungsweise keilartig ausgebildet sind beziehungsweise zusammenwirken. Auf der der integrierten Klemmleiste 22 gegenüberliegenden Seite wird die Batterie 14 somit in Fahrzeughochrichtung nach oben und in Fahrzeugquerrichtung bezogen auf die Bildebenen von Fig. 8 und 9 nach links durch Klemmen beziehungsweise Festklemmen gesichert. Die Klemmschiene 34 der Befestigungseinrichtung 32 ist dabei separat vom Muldenelement 10 ausgebildet.

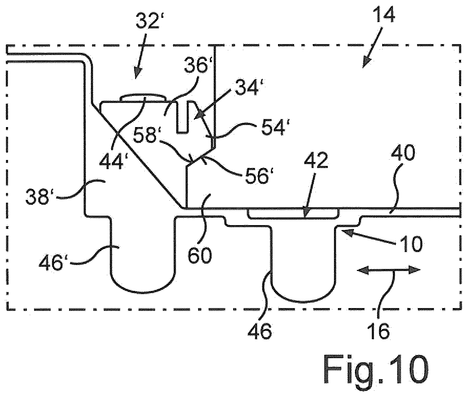

Fig. 10 zeigt ausschnittsweise eine Anordnung der Batterie 14 gemäß einer zweiten Ausführungsform am Muldenelement 10. Die Batterie 14 gemäß der zweiten Ausführungsform weist eine größere, bezogen auf den Einbauzustand in Fahrzeugquerrichtung verlaufende Erstreckung auf als die Batterie 14 gemäß der ersten Ausführungsform. Diese unterschiedlichen Erstreckungen sind beispielsweise durch unterschiedliche Speicherkapazitäten bedingt. Die Batterie 14 gemäß der ersten Ausführungsform weist beispielsweise eine geringere Speicherkapazität als die Batterie 14 gemäß der zweiten Ausführungsform auf. Beispielsweise weist die Batterie 14 gemäß der ersten Ausführungsform eine Speicherkapazität von 90 Amperestunden (Ah) auf, wobei die Batterie 14 gemäß der zweiten Ausführungsform eine Speicherkapazität von 105 Amperestunden aufweist.

Wie aus Fig. 10 erkennbar ist, erfolgt die Befestigung der Batterie 14 gemäß der zweiten Ausführungsform auf der der integrierten Klemmleiste 22 gegenüberliegenden Seite mittels einer Befestigungseinrichtung 32', welche zumindest hinsichtlich ihrer Funktion der Befestigungseinrichtung 32 entspricht. Die Befestigungseinrichtung 32' umfasst eine Klemmschiene 34' mit einem Oberteil 36' und einem Unterteil 38'. Bei dem Oberteil 36' gemäß Fig. 10 kann es sich ohne weiteres um das Oberteil 36 gemäß Fig. 8 handeln, mittels welchem die Batterie 14 gemäß der ersten Ausführungsform am Muldenelement 10 befestigt wird.

Das Unterteil 38'gemäß Fig. 10 ist nun jedoch in das Muldenelement 10 integriert. Somit ist die Klemmschiene 34' gemäß Fig. 10 in das Muldenelement 10 teilintegriert, da nun nicht das Oberteil 36' und das Unterteil 38', sondern lediglich das Oberteil 36' separat vom Muldenelement 10 ausgebildet ist. Dadurch, dass das Unterteil 38' in das Muldenelement 10 integriert ist, kann eine direkte Krafteinleitung vom Oberteil 36' in das Unterteil 38' und somit in das Druckgussbauteil erfolgen.

Das Funktionsprinzip der Befestigungseinrichtung 32', insbesondere der Klemmschiene 34', kann vollständig dem Funktionsprinzip der Befestigungseinrichtung 32 bzw. der Klemmschiene 34 entsprechen, wie besonders gut aus Fig. 8 erkennbar ist. Zum Befestigen des Oberteils 36' am Unterteil 38' und somit am Muldenelement 10 ist eine Schraube 44' vorgesehen, welche in ein korrespondierendes Schraubelement 48' eingeschraubt wird. Das Schraubelement 48' ist dabei in einem Schraubdom 46' des Muldenelements 10 aufgenommen und beispielsweise in diesem eingeschraubt und/oder auf andere Weise befestigt. Auch das Oberteil 36' weist eine Klemmnase 54' mit einer Abstützfläche 56' auf, welche mit einer korrespondierenden Abstützfläche 58' des Klemmfußes 60 der Batterie 14 gemäß der zweiten Ausführungsform zusammenwirkt. Das zu den Abstützflächen 56, 58 Geschilderte kann ohne weiteres auch auf die Abstützflächen 56' und 58' entsprechend übertragen werden. Durch die Teilintegration der Klemmschiene 34' in das Muldenelements 10 können die Teileanzahl und somit das Gewicht der Anordnung besonders gering gehalten werden.

Das jeweilige Schraubelement 48, 48' ist ein Gewindeeinsatz. Durch die Verwendung eines solchen Gewindeeinsatzes kann vermieden werden, dass die jeweilige Schraube 44, 44' direkt in das als Gussbauteil ausgebildete Muldenelement 10 eingeschraubt wird. Die jeweilige Schraube 44, 44' kann somit besonders oft gelöst und wieder festgeschraubt werden.

Alternativ zu dem Einsatz des jeweiligen Schraubelements 48, 48`, unter dessen Vermittlung die jeweils korrespondierende Schraube 44, 44' mit dem Muldenelement 10 mittelbar verschraubt ist, ist es möglich, als die Schrauben 44, 44'gewindeformende Schrauben zu verwenden. Derartige gewindeformende Schrauben werden üblicherweise auch als selbstschneidende Schrauben bezeichnet. Dies bedeutet, dass die jeweilige Schraube 44, 44'ein Gewinde, vorliegend ein Außengewinde aufweist, mittels welchem ein korrespondierendes Gegengewinde, vorliegend ein Innengewinde im jeweiligen Schraubdom 46, 46' ausgebildet bzw. eingeschnitten wird, wenn die jeweilige Schraube 44, 44'mit einem korrespondierenden Bauteil, vorliegend mit dem Muldenelement 10 verschraubt wird. Mit anderen Worten, wird die jeweilige Schraube 44, 44' in den jeweiligen Schraubdom 46, 46' eingeschraubt, so geht gleichzeitig damit die Ausbildung eines Innengewindes im Schraubdom 46, 46' einher.

Da das Herstellen eines jeweiligen Innengewindes im entsprechenden Schraubdom 46, 46' mit dem Einschrauben des Schraubelements 48 bzw. 48' einhergeht, ist es nicht erforderlich, ein Innengewinde am jeweiligen Schraubdom 46' herzustellen, bevor die jeweilige Schraube 44, 44' eingeschraubt wird.

Die Schrauben 44, 44' können somit in das Muldenelement 10 bzw. in den jeweiligen Schraubdom 46, 46' direkt eingeschraubt werden, ohne dass das Muldenelement 10 bzw. der jeweilige Schraubdom 46, 46' bereits vor dem Einschrauben ein Gewinde, insbesondere ein Innengewinde, aufweist.

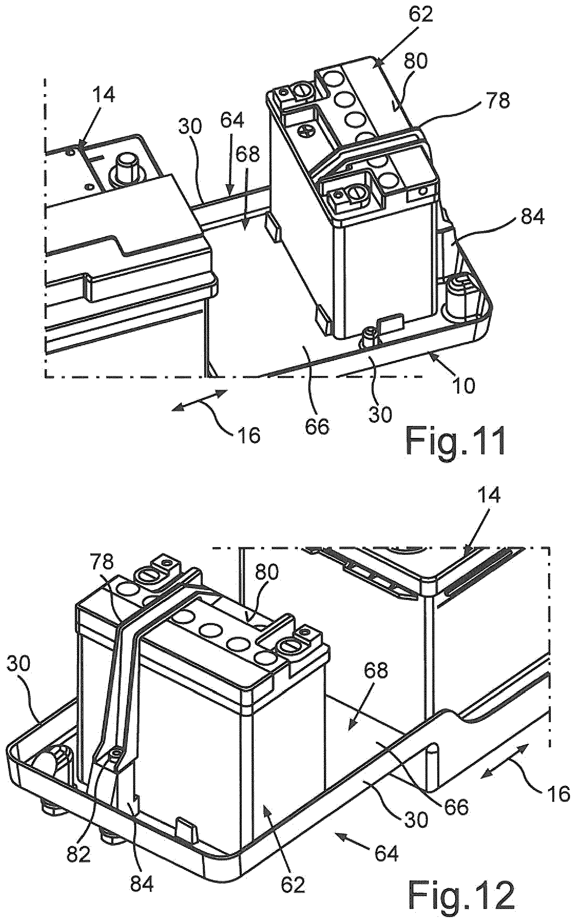

Wie aus Fig. 6 und besonders gut aus Fig. 11 und 12 erkennbar ist, ist bei der Anordnung eine von der Batterie 14 separat ausgebildete und zusätzlich zur Batterie 14 vorgesehene, zweite Batterie 62 am Muldenelement 10 befestigt. In Längserstreckungsrichtung des Muldenelements 10 erstreckt sich von der Aufnahmemulde 12 ein Seitenteil 64 des Muldenelements 10 weg, dessen Boden 66 gegenüber dem Boden 40 der Aufnahmemulde 12 auf einem unterschiedlichen, in Fahrzeughochrichtung höheren Niveau angeordnet ist. Die jeweilige, vordere und hintere Wandung 30 der Aufnahmemulde 12 erstreckt sich auch bis zum Seitenteil 64, so dass das Seitenteil 64 eine muldenförmige oder wannenförmige Aufnahme 68 aufweist, in der die Batterie 62 teilweise aufgenommen ist. Die Batterie 62 dient zur Erweiterung des Bordnetzes des Personenkraftwagens, wobei das Bordnetz beispielsweise eine Spannung von 24 Volt aufweist. Zur Fixierung der Batterie 62 am Muldenelement 10 in Fahrzeugquerrichtung sind Anschlagelemente 70 (Fig. 3) vorgesehen, weiche jeweilige Anlageflächen 72 aufweisen. In ihrem Einbauzustand befindet sich die Batterie 62 in Stützanlage mit den Anlageflächen 72. Darüber hinaus weist das Seitenteil 64 des einstückigen Muldenelements 10 Anschlagelemente 74 mit Anlageflächen 76 zur Fixierung beziehungsweise Abstützung der Batterie 62 in Fahrzeuglängsrichtung auf.

Um die Batterie 62 auch in Fahrzeughochrichtung nach oben am Muldenelement 10 beziehungsweise am einstückig mit der Aufnahmemulde 12 ausgebildeten Seitenteil 64 zu fixieren, ist ein vom Muldenelements 10 separat ausgebildeter und beispielsweise aus einem Kunststoff hergestellter Halter 78 vorgesehen. Der Halter 78 umgreift die Batterie 62 zumindest teilweise. Insbesondere ist der Halter 78 auf einer dem Boden 66 abgewandten Oberseite 80 der Batterie 62 angeordnet und an dieser abgestützt, so dass der Halter 78 die Batterie 62 gegen den Boden 66 der Aufnahme 68 hält.

Der Halter 78 selbst ist mittels einer Schraube 82 am Muldenelement 10 befestigt. Vorzugsweise ist die Schraube 82 eine gewindeformende beziehungsweise selbstschneidende Schraube, so dass beim Festschrauben der Schraube 82 am Muldenelement 10 ein mit einem Gewinde, insbesondere Außengewinde, der Schraube 82 korrespondierendes Gewinde, insbesondere Innengewinde, ausgebildet wird. Vorzugsweise ist die Schraube 82 direkt in das Druckgussbauteil eingeschraubt, so dass mittels ihres Gewindes, insbesondere Außengewindes, ein damit korrespondierendes Gewinde, insbesondere Innengewinde, am Muldenelement 10 beziehungsweise am Seitenteil 64 dann und erst dann ausgebildet wird, wenn die Schraube 82 in das Muldenelement 10 eingeschraubt wird. Hierzu weist das Muldenelement 10 einen Schraubdom 84 auf, in welchen die Schraube 82 eingeschraubt wird. Mittels des Halters 78 kann ein besonders guter Gegenhalt in Fahrzeughochrichtung realisiert werden, so dass die Batterie 62 besonders fest am Muldenelement 10 fixiert ist.

Wie besonders gut aus Fig. 1 bis 4, 6 und 7 erkennbar ist, weist das Muldenelement 10 auf einer dem Seitenteil 64 gegenüberliegenden Seite ein zweites Seitenteil 81 auf, welches ebenso wannenartig beziehungsweise wannenförmig oder muldenartig beziehungsweise muldenförmig ausgebildet ist und eine wannenförmige beziehungsweise muldenförmige Aufnahme 83 aufweist. Das zweite Seitenteil 81 dient dabei zum Aufnehmen eines weiteren Bauteils 85, wobei es sich beispielsweise um ein Elektronikbauteil des Kraftwagens handelt.

Vorzugsweise weist das Muldenelement 10 wenigstens eine Anbindungseinrichtung vorzugsweise mit wenigstens zwei Anbindungselementen auf. An den Anbindungselementen kann jeweils eine Versteifungsstrebe am Muldenelement beziehungsweise am Muldenelement 10 festgelegt werden. Bei diesen Versteifungsstreben handelt es sich vorzugsweise um Versteifungsstreben, welche unterhalb des Fahrzeugbodens des Personenkraftwagens schräg zueinander und schräg zur Fahrzeuglängsrichtung verlaufen und der Aussteifung der Karosserie des Personenkraftwagens dienen. Derartige Versteifungsstreben sind beispielsweise Torsionsstreben oder Schubstreben.

### Bezugszeichenliste

- 10: Muldenelement
- 12: Aufnahmemulde
- 14: Batterie
- 16: Richtungspfeil
- 18: Anschlagelemente
- 20: Anlagefläche
- 22: Klemmleiste
- 24: Klemmfuß
- 26: Abstützfläche
- 28: Abstützfläche
- 30: Wandungen
- 32, 32': Befestigungseinrichtung
- 34, 34': Klemmschiene
- 36, 36': Oberteil
- 38, 38': Unterteil
- 40: Boden
- 42: Aussparung
- 44, 44': Schraube
- 46, 46': Schraubdom
- 48, 48': Schraubelement
- 50: Durchgangsöffnungen
- 52: Abstützflächen
- 54, 54': Klemmnase
- 56, 56': Abstützfläche
- 58, 58': Abstützfläche
- 60: Klemmfuß
- 62: zweite Batterie
- 64: Seitenteil
- 66: Boden
- 68: Aufnahme
- 70: Anschlagelemente
- 72: Anlageflächen
- 74: Anschlagelemente
- 76: Anlageflächen
- 78: Halter
- 80: Oberseite
- 81: Seitenteil
- 82: Schraube
- 83: Aufnahme
- 84: Schraubdorn
- 85: weiteres Bauteil

## Patentansprüche

1. Personenkraftwagen mit einem Muldenelement (10), welches in einem Stauraumbereich des Personenkraftwagens anordenbar ist und wenigstens eine in Fahrzeughochrichtung nach oben offene Aufnahmemulde (12) zum zumindest teilweisen Aufnehmen wenigstens einer Batterie (14) des Personenkraftwagens aufweist, wobei das Muldenelement (10) als Druckgussbauteil aus einem Leichtmetall ausgebildet ist,
**dadurch gekennzeichnet, dass** das Muldenelement (10) wenigstens eine Anbindungseinrichtung mit wenigstens zwei Anbindungselementen aufweist, wobei an den Anbindungselementen jeweils eine Versteifungsstrebe am Muldenelement (10) festgelegt ist, wobei die Versteifungsstreben unterhalb des Fahrzeugbodens des Personenkraftwagens schräg zueinander und schräg zur Fahrzeuglängsrichtung verlaufen und der Aussteifung der Karosserie des Personenkraftwagens dienen.

2. Personenkraftwagen nach Anspruch 1,
**dadurch gekennzeichnet, dass** die Versteifungsstreben als Torsionsstreben ausgebildet sind.

3. Personenkraftwagen nach Anspruch 1,
**dadurch gekennzeichnet, dass** die Versteifungsstreben als Schubstreben ausgebildet sind.

4. Personenkraftwagen nach einem der vorhergehenden Ansprüche,
**dadurch gekennzeichnet, dass**
das einstückige Muldenelement (10) wenigstens ein Befestigungselement (22) zum Befestigen der Batterie (14) am Muldenelement (10) aufweist.

5. Personenkraftwagen nach Anspruch 4,
**dadurch gekennzeichnet, dass**
das Befestigungselement (22) als Formschlusselement ausgebildet ist, mittels welchem ein korrespondierendes, batterieseitiges Befestigungselement (24) in Fahrzeughochrichtung nach oben überdeckbar ist.

6. Personenkraftwagen nach einem der vorhergehenden Ansprüche,
**dadurch gekennzeichnet, dass**
das Leichtmetall Aluminium ist.

## Claims

1. A passenger car with a well element (10) which can be arranged in a stowage-space region of the passenger car and has at least one receiving well (12) which is open upwards in the vertical direction of the vehicle for at least partially receiving at least one battery (14) of the passenger car, wherein the well element (10) is formed as a diecast component from a lightweight metal,
**characterised in that** the well element (10) has at least one attachment means with at least two attachment elements, with one stiffening strut in each case being fixed on the well element (10) on the attachment elements, the stiffening struts running obliquely to each other and obliquely to the longitudinal direction of the vehicle beneath the vehicle floor of the passenger car and serving to brace the body of the passenger car.

2. A passenger car according to Claim 1,
**characterised in that** the stiffening struts are formed as torsion struts.

3. A passenger car according to Claim 1,
**characterised in that** the stiffening struts are formed as thrust struts.

4. A passenger car according to one of the preceding claims,
**characterised in that**
the one-piece well element (10) has at least one fastening element (22) for fastening the battery (14) on the well element (10).

5. A passenger car according to Claim 4,
**characterised in that**
the fastening element (22) is formed as a positively-locking element, by means of which a corresponding, battery-side, fastening element (24) can be covered upwards in the vertical direction of the vehicle.

6. A passenger car according to one of the preceding claims,
**characterised in that**
the lightweight metal is aluminium.

## Revendications

1. Véhicule de tourisme équipé d'un élément creux (10) pouvant être installé dans l'espace de rangement de ce véhicule de tourisme, et au moins une cavité de réception (12) ouverte vers le haut dans la direction de la hauteur du véhicule destinée à recevoir au moins partiellement une batterie (14) du véhicule de tourisme, l'élément creux (10) étant réalisé sous la forme d'une pièce moulée sous pression en un métal léger,
**caractérisé en ce que**
l'élément creux (10) comprend au moins un dispositif de liaison muni d'au moins deux éléments de liaison, sur lesquels est respectivement fixée sur l'élément creux (10) une entretoise de renfort, les entretoises de renfort s'étendant obliquement l'une par rapport à l'autre au-dessous du plancher du véhicule de tourisme et transversalement à la direction longitudinale de ce véhicule et servant à renforcer la carrosserie de celui-ci.

2. Véhicule de tourisme conforme à la revendication 1,
**caractérisé en ce que**
les entretoises de renfort sont réalisées sous la forme d'entretoises de torsion.

3. Véhicule de tourisme conforme à la revendication 1,
**caractérisé en ce que**
les entretoises de renfort sont réalisées sous la forme d'entretoises de poussée.

4. Véhicule de tourisme conforme à l'une des revendications précédentes,
**caractérisé en ce que**
l'élément creux réalisé en une seule pièce (10) comprend au moins un élément de fixation (22) pour permettre la fixation de la batterie (14) sur cet élément (10).

5. Véhicule de tourisme conforme à la revendication 4,
**caractérisé en ce que**
l'élément de fixation (22) est réalisé sous la forme d'un élément de liaison par la forme avec lequel un élément de fixation correspondant (24) situé côté batterie peut être recouvert par le haut dans la direction de la hauteur du véhicule.

6. Véhicule de tourisme conforme à l'une des revendications précédentes,
**caractérisé en ce que**
le métal léger est de l'aluminium.
